# EUROPEAN PATENT SPECIFICATION

(11) **EP 3 269 993 B1**
(45) Date of publication and mention of the grant of the patent: **08.04.2020**
(21) Application number: 16179605.7
(22) Date of filing: 15.07.2016
(51) Int. Cl.: F16D 55/227, F16D 65/097, F16D 66/02, B60T 13/74

(54) **DISC BRAKE FOR A COMMERCIAL VEHICLE**
SCHEIBENBREMSE FÜR EIN NUTZFAHRZEUG
FREIN À DISQUE POUR UN VÉHICULE UTILITAIRE

(43) Date of publication of application: 17.01.2018
(73) Proprietor: KNORR-BREMSE Systeme für Nutzfahrzeuge GmbH, 80809 München (DE)
(72) Inventor: Toth, Janos, 6000 Kecskemét (HU); Theil, Robert, 82299 Türkenfeld (DE); Mlinárcsek, Csaba, 1165 Budapest (HU); Kovacsik, Peter, 1149 Budapest (HU); Fuchs, Alexander, 81677 München (DE)

(56) References cited:
- DE-C1- 19 903 620
- DE-U1-202016 102 686
- GB-A- 2 315 832
- US-B1- 6 286 635

## Description

The invention relates to a disc brake, in particular pneumatically actuated, for a vehicle, in particular for a commercial vehicle.

A generic disc brake has a floating caliper and a brake disc with a brake application device arranged on one side, wherein the application device has a brake lever swivellable by a brake actuator, e.g. an operating cylinder. In a braking situation, the brake actuator presses an inner side brake pad to the brake disc. Due to the resulting reaction force, the floating caliper moves in the opposite direction and presses the outer brake pad to the brake disc as well. The brake caliper is float-mounted on the brake carrier and can slide axially due to the very limited friction force.

The friction force between the brake pads and the brake disc decelerates the vehicle. After releasing the brake, the clamping force of the brake pads is decreasing and the rotation of the brake disc or outer dynamic effects move the caliper back to its initial position, when the disc brake is in a release position of the disc brake. The position of the caliper on the brake carrier is not fixed in the initial position, i.e. in the release position of the disc brake.

Dynamic effects due to road surface or turning maneuvers of the vehicle can result in lateral accelerations on the floating caliper, which are able to move the caliper on its guide bearings. These movements of the floating caliper could lead to an unwanted contact of the brake pad(s) and the brake disc. This can result in momentary power dissipation due to dragging of the brake. Such a residual drag torque can cause unwanted additional fuel consumption, power loss and pad/disc wear.

The state of the art provides several solutions to solve that problem.

The document DE 4301621 A1 describes a disc brake having a floating caliper and expansion springs for the brake pads. The expansion spring is fixed to the brake carrier and pushes the brake pads from the brake disc when the brake is released. Thus the caliper is moved to its centralized or initial position. The geometry and the force of the spring are calculated for accurate operation independent of the wear status of the brake pads. Due to the complicated design of the spring, the spring is sensitive to manufacturing tolerances and deformation deriving from its handling till the installation, from assembly and from usage. During operation of the, other environmental effects, e.g. heat radiation of the brake parts, corrosion or other mechanical impacts are stressing the component. The durability of the spring is lower than the durability of the disc brake. This can require a change of the spring together with a change of the brake pads. According to testing results the efficiency of eliminating the drag torque is less than 100%.

DE 19903620 C1 describes a pneumatically actuated disc brake for road vehicles. A synchronization chain drives a passive caliper position control. A caliper position adjuster is assembled into the sliding bearing unit of the caliper, its driver gear is connected by the synchronization chain together with the wear adjuster drive. The correct synchronization of the caliper movement with moving other brake components depending on their wear status is important for avoiding straining and damaging of the parts. The position adjuster is designed for setting the caliper position according to the half of the clearance of the pads and the brake disc. It is assumed that the wear of the pads is equal on both sides. In case of the different wearing of the pads, it can be possible that the adjusted caliper position is not centered. This can result in unwanted drag torque. Another problem can be the limited place in the sliding bearing unit for placing a spring, which is suitable for centering the caliper in every wear case.

DE 199 03 620 C1 refers to a disc brake, in particular a pneumatically operated disc brake for road vehicles. The disc brake has a re-setting unit to compensate for brake wear. An adjusting unit is coupled to the re-setting unit for guided movement of the brake caliper relative to the brake carrier, when the re-setting unit executes re-setting movements. The brake actuator has a turning lever, acting on a cross strut, which during brake tensioning uses pressure pads to press spindles in direction of a brake shoe. The spindles are connected by a chain drive acting as synchronizer unit.

US 6 286 635 B1 relates to a vehicle braking system having a brake rotor and brake pedal-actuated hydraulic piston that actuates a brake caliper to engage a friction brake with the rotor and further having a brake caliper retractor mechanism including an actuator for actively controlling retraction of the caliper relative to the rotor to provide either a friction brake force versus pedal brake force curve where the friction brake initially contacts the rotor such that braking force from the brake pedal begins at zero pedal force or a friction brake force versus pedal brake force curve that is displaced relative thereto where the friction brake initially is positioned out of contact with the rotor such that braking force from the brake pedal begins at a finite preselected pedal force greater than zero.

The object of the invention is to develop the generic disc brake to reduce wear and costs.

The object is solved by a disc brake according to claim 1.

The object is also solved by a disc brake according to claim 16.

The invention provides a disc brake having a caliper position control unit, which is able to eliminate or at least reduce significantly the drag and reduce wear and costs.

According to the invention, a disc brake, in particular pneumatically actuated, for a vehicle, in particular for a commercial vehicle, comprises a floating caliper straddling a brake disc and float-mounted on at least one guide bearing of a stationary brake carrier; two brake pads displaceable arranged in opposite direction in the caliper, wherein one inner brake pad of the two brake pads can be pressed against the brake disc by a brake application device having at least one brake plunger unit and a brake lever; and at least one readjusting device for moving the caliper back to its initial position when the disc brake is in a release position of the disc brake after braking. The readjusting device is an active caliper position control unit comprising at least one active force generating unit, a transmission unit, at least one spring element and a control unit.

The active caliper position control unit is advantageous by using measures for a passive centering (e.g. by spring(s)) completed with an active position adjuster (e.g. using an electrical controlled motor or other activator) where the measures for the passive centering secure the releasing of the brake after braking and the device for the active centering defines the position of the caliper on the brake carrier.

The passive centering elements (spring elements) keep the caliper at the defined position independently from external influences on the vehicle.

The invention provides a centering of the caliper after brake application, which can eliminate or at least significantly reduce drag torque, and therefore, unwanted additional fuel consumption, power loss and pad/disc wear.

This can be achieved by the centered position of the caliper, wherein the values of both clearances between the brake pads and the brake disc are equal. In other words, the clearances are symmetrical.

In a particularly preferred embodiment of the invention, the caliper position control unit is arranged at an outer end of a guide section of a caliper head and cooperates with the stationary brake carrier, wherein the spring element is arranged between an inner wall of a section of a caliper back and the stationary brake carrier. The caliper position control unit is a compact unit and can be installed easily, which reduces costs.

In another embodiment, the at least one active force generating unit is an electric adjuster motor, which is easy to control.

In a preferred embodiment, the active caliper position control unit further comprises a holder, which is fixed to the adjuster motor and fixed to the guide section of the caliper head. This solution is easy to install.

In a further preferred embodiment, the transmission unit has an adjuster spindle which meshes with the holder via a thread and is non-rotatably but axially displaceable connected to a motor shaft of the adjuster motor, wherein an end section of the adjuster spindle is in contact with a guide bolt of the guide bearing via a pressure element. In this case, an installation space can be advantageous limited. For this reason, the adjuster motor, the holder and the transmission unit can be arranged coaxially to a guide axis of the guide bearing, too.

In another embodiment, the at least one active force generating unit is an electric linear motor, which can generate a linear movement with a small amount of parts.

The active caliper position control unit further comprises a holder, which is fixed to the linear motor and fixed to the guide section of the caliper head. A small limited installation space can be achieved.

In a preferred embodiment an adjusting rod of the linear motor forms the transmission unit together with a pressure element, which is arranged at an end section of the adjusting rod and contacts the guide bolt of the guide bearing. A small number of parts can reduce the costs of parts as well as installation time.

Alternatively, the transmission unit has a spindle drive that is designed as a ball screw drive to transform the linear movement of the linear motor its rod into a rotational motion. An advantage of this solution is a larger field of application.

A compact design can be achieved with an embodiment in which the linear motor, the holder and the transmission unit are arranged coaxially to a guide axis of the guide bearing.

In another alternative embodiment the at least one active force generating unit is an electromagnet. This part is a standard part at low costs with high quality.

It is advantageous that the active caliper position control unit further comprises a holder, which is fixed to the electromagnet and fixed to the guide section of the caliper head, wherein an adjusting rod of the electromagnet forms the transmission unit together with a pressure element, which is arranged at an end section of the adjusting rod and contacts the guide bolt of the guide bearing. Thus a compact unit can be achieved.

In another alternative embodiment the at least one active force generating unit is a fluid cylinder comprising a piston rod with a piston, wherein the piston rod forms the transmission unit, wherein the piston rod contacts the guide bolt of the guide bearing. The number of parts is small and the quality of such a standard fluid cylinder is high at low costs.

In a further embodiment the disk brake comprises a wear adjuster unit, wherein the wear adjuster unit and the active caliper position control unit comprise a common adjuster motor and a common electric control unit, wherein the common adjuster motor has an axial and/or radial switched gear. This is advantageous as common parts can be used and the number of parts is small.

A simple solution to actuate the switched gear is that the axial and/or radial switched gear of the common electric adjuster motor is switched by an electromagnet.

According to the invention, an alternative disc brake for a vehicle, in particular for a commercial vehicle, is provided and comprises a floating caliper straddling a brake disc and float-mounted on at least one guide bearing of a stationary brake carrier; two brake pads displaceable arranged in opposite direction in the caliper, wherein one inner brake pad of the two brake pads can be pressed against the brake disc by a brake application device having at least one brake plunger unit and a brake lever; and at least one readjusting device for moving the caliper back to its initial position when the disc brake is in a release position of the disc brake after braking. The at least one readjusting device is a passive caliper position control unit comprising two spring elements and a cylindrical member, wherein the two spring elements are attached to the cylindrical member, which in turn is float-mounted on the brake carrier.

In this way, a compact caliper position control unit is provided, which can be installed into the brake carrier within a limited space.

In an embodiment each one of the two spring elements is guided by means of a cylindrical spring guide, wherein each spring guide is respectively coaxially fixed to an end face of the cylindrical member, and wherein an outer spring element of the two spring elements is arranged between a caliper back and an outer end face of the cylindrical member, and an inner spring element of the two spring elements is arranged between a caliper head and an inner end face of the cylindrical member. A compact unit can be achieved.

In a further embodiment the cylindrical member is inserted into a guide section of the brake carrier, wherein the guide section is a through hole formed into the brake carrier in parallel with a brake disc axis, and wherein contact surfaces of the cylindrical member and an inner wall of the guide section are provided with a high frictional force. This solution has only a small number of parts and is easy to install.

It is advantageous that the two spring elements are provided with equal spring forces in order to achieve a centered position of the caliper easily.

Using an active control solution provides the possibility for an optional caliper position adjustment depending on the road conditions, vehicle speed, steering situations etc. The active caliper position control can handle the effects of different wear of the pads, too. Reduction potential in fuel consumption - ca. 250W power loss reduction, equivalent to ca. 1% fuel costs (estimated for 4 brake system with a mileage of 150 000 km) due to reduction of residual torque by avoiding unintended pad-disc contact.

The invention will be better understood by means of the following description, given with reference to the drawings, which illustrate the embodiments of the invention, and in which:
- Figure 1: illustrates a schematic partial cross-sectional view of a disc brake of the invention;
- Figure 2: shows a generally schematic section through the disc brake of Figure 1 with a first embodiment of a caliper position control unit;
- Figure 3: is an enlarged sectional view of the caliper position control unit of Figure 2;
- Figures 4 to 7: illustrate generally schematic sections through the disc brake of Figure 1 with further embodiments of the caliper position control unit; and
- Figures 8 to 9: show schematic arrangements of the caliper position control unit in combination with a wear adjuster system.

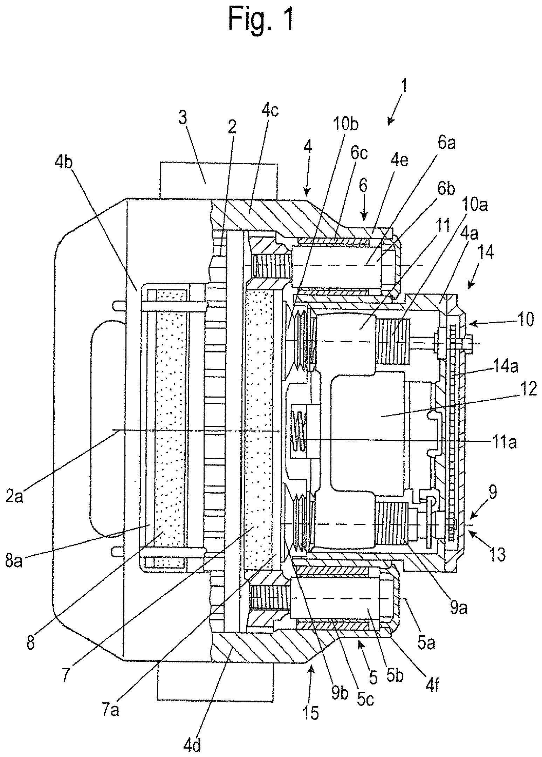

**Figure 1** shows a schematic partial cross-sectional view of a disc brake 1 of the invention. The disc brake 1 is a part of a not shown e.g. commercial vehicle and has a brake disc 2 with a disc axis 2a, a brake carrier 3, a floating caliper 4, two guide bearings 5, 6, brake pads 7, 8, and brake plunger units 9, 10.

The floating caliper 4 is mounted on the two guide bearings 5, 6 of the brake carrier 3. Each guide bearing 5, 6 comprises a guide axis 5a, 6a, a guide bolt 5b, 6b and a sliding bearing 5c, 6c. The floating caliper can slide on the sliding bearings 5c, 6c of the guide bearings 5, 6 axially in a direction of the guide axis 5a, 6a in parallel with the disc axis 2a. The floating caliper straddles the brake disc 2, and comprises a caliper head 4a and a caliper back 4b, which are connected by two tension struts 4c, 4d.

There is a brake pad 7, 8 on each side of the brake disc 2. The brake pads 7, 8 are arranged in and supported by the brake carrier 3. Each brake pad 7, 8 comprises a backplate 7a, 8a, on which a brake lining is fixed. The brake pad 7 arranged between the brake disc 2 and the caliper head 4a is called the inner brake pad 7, and the other brake pad 8 between the brake disc 2 and the caliper back 4b is called the outer brake pad 8.

Furthermore, the caliper head 4a is provided with two guide sections 4e, 4f on both sides. Each guide section 4e, 4f of the caliper head 4a surrounds the respective associated guide bearing 5, 6.

The caliper head 4a contains a not indicated brake application device comprising two brake plunger units 9, 10, a crosshead 11 and a brake lever 12.

Each brake plunger unit 9, 10 has a brake plunger 9a, 10a (also called actuating spindle). An end of each brake plunger 9a, 10a facing to the brake disc 2 is connected to tappet 9b, 10b. The tappets 9b, 10b contact the backplate 7a of the inner brake pad 7.

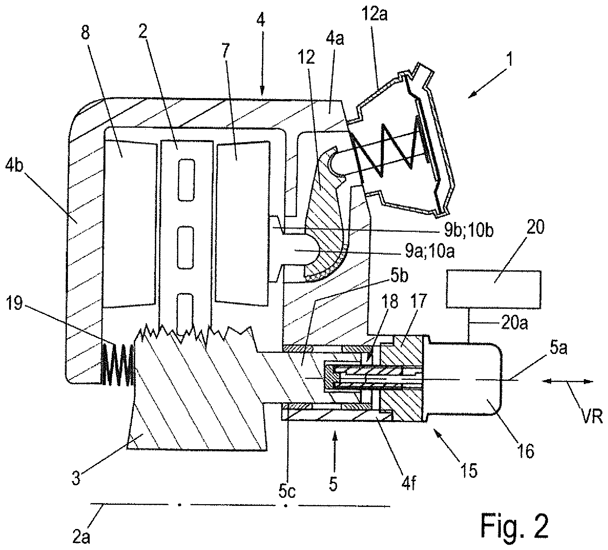

The brake plungers 9a, 10a are each provided with an external thread and screwed into bores with internal thread of the crosshead 11. The crosshead 11 is in contact with the brake lever 12 and can move in a direction parallel to the disc axis 2a. The brake lever 12 is actuated by brake actuator 12a (see Figure 2), e.g. a compressed air cylinder.

A return spring 11a is arranged between the crosshead and the caliper head 4a. The return spring 11a exerts its force on the crosshead 11 in order to push it away from the brake disc 2, when the disk brake 1 is released.

One of the brake plungers 9a, 10a, here brake plunger 9a, is equipped with a wear adjuster unit 13, inserted into the brake plunger 9a.

The two brake plungers 9a, 10a are coupled by means of a synchronisation unit 14 having a synchronisation chain 14a.

Document EP 0 566 008 A1 illustrates an example of the structure and functional principle of a disc brake and a wear adjuster unit 13.

Furthermore, the disc brake 1 comprises at least one readjusting device for moving the caliper 4 to its initial position when the disc brake 1 is in the release position of the disk brake 1 (shown in Figure 1). Here, this readjusting device is designed as a caliper position control unit 15. As the caliper 4 can slide on the guide bearings 5, 6 of the brake carrier 3 and changes its position in relation to the stationary brake carrier 3 not only at brake actuation and releasing of the brake, but also e.g. in case of unintended traffic situations, it can cause the so called drag torque which creates unwanted additional fuel consumption as well as unwanted additional wear of the brake parts. The caliper position control unit 15 can eliminate or at least reduce these unwanted effects. The caliper position control unit 15 will be described in detail below.

**Figure 2** shows a generally schematic section through the disc brake 1 of Figure 1 with a first embodiment of the caliper position control unit 15.

When the brake actuator 12a pivots the brake lever 12, the latter acts upon the crosshead 11, which in turn moves the brake plunger 9a, 10a towards the brake disc 2. The tappets 9b, 10b at the ends of the brake plungers 9a, 10a are in contact with the inner brake pad 7, which is pressed against the inner side of the brake disc 2. Due to the resulting reaction force, the caliper 4 moves on the guide bearings 5, 6 in the opposite direction and presses the outer brake pad 8 against the other side of the brake disc 2. A general moving direction is indicated by the arrow direction VR in parallel with the guide axis 5a as well as with the brake disc axis 2.

The friction force between the brake pads 7, 8 and the brake disc 2 decelerates the vehicle. During releasing the disc brake 1 the clamping force of the brake pads 7, 8 is decreasing, and the rotation of the brake disc 2 or other dynamic effects move the caliper 4 to its initial position when the disc brake 1 is in the release position of the disc brake 1 shown in Figure 2.

In case of the initial position of the caliper 4, the caliper 4 should be in a centered position on the brake carrier 3 so that the brake pads 7, 8 do not contact the brake disc 2. The term "centered position" means that there is a clearance between the brake disc 2 and the inner brake pad 7 as well as between the brake disc 2 and the outer brake pad 8, wherein the values of these both clearances are equal. In other words, the clearances are symmetrical.

As the caliper is usually not fixed in the release position of the disc brake 1, dynamic effects due to road surface or turning maneuvers of the vehicle result in lateral accelerations on the floating caliper 4, whereby the caliper 4 can be displaced on the guide bearings 5, 6 out of its centered position. These movements of the floating caliper 4 could lead to an unwanted contact of the brake pads 7, 8 and the brake disc 2, which could result in momentary power dissipation due to dragging of the disc brake 1. If the caliper 4 has not been moved into its centered position in the release position of the disc brake 1 after brake application, this can cause a negative effect on the residual drag torque which in turn causes unwanted additional fuel consumption, power loss and brake pad/disc wear.

For this reason, the disc brake 1 is provided with the caliper position control unit 15.

The inner brake pad 7 is attached to the tappets 9b, 10b of the brake plungers 9a, 10a, and its movement is coupled the movement of the brake actuator 12a and the brake lever 12.

The caliper 4 is shown in its centered position in the release position of the disc brake 1. The guide section 4f of the caliper head 4 surrounds the associated guide bearing 5, wherein the sliding bearing 5c is arranged between a bore of the guide section 4f and the guide bolt 5b.

The caliper position control unit 15 is arranged at an outer end of the guide section 4f of the caliper head 4a and cooperates with the stationary brake carrier 3, which will be described in detail below.

The caliper position control unit 15 of this first embodiment is an active caliper position control unit 15 and comprises an adjuster motor 16 as an active force generating unit, a holder 17, a transmission unit 18, a spring element 19 and a control unit 20. The adjuster motor 16, holder 17 and the transmission unit 18 are coaxially arranged to the guide axis 5a of the guide bearing 5.

The spring element 19 is arranged between an inner wall of a section of the caliper back 4b and the stationary brake carrier 3.

The control unit 20 is connected to the adjuster motor 16 by an electroconductive control line 20a. In another embodiment the control unit 20 can be further connected to a not shown brake control unit.

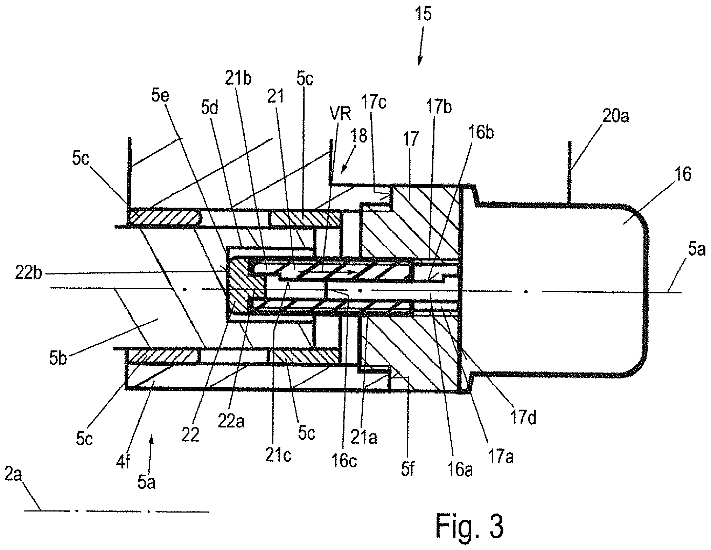

The caliper position control unit 15 with its parts except the spring element 19 will be now described in detail with reference to **Figure 3****,** which is an enlarged sectional view of the caliper position control unit 15 of Figure 2.

The adjuster motor 16 is here an electric motor and comprises a motor shaft 16a with a flattened section 16b and a shaft end 16c. The flattened section 16b extends to the shaft end 16c. The adjuster motor 16 is fixed on an outer plane end face 17d of the holder 17, e.g. by screws.

The holder 17 has a central longitudinal bore 17a with an inner thread 17b. The inner end of the holder 17 has a shoulder with an external thread and a circumferential end face 17c. The holder 17 is screwed with its inner end with the external thread into the outer end of the guide section 4f of the caliper head 4a, wherein the circumferential face end 17b of the holder 17 contacts a circumferential face end 5f of the guide section 4f.

The motor shaft 16a of the adjuster motor 16 faces to the brake disc 2, extends through the bore 17a of the holder 17 and protrudes from the inner end of the holder 17.

The transmission unit 18 comprises an adjuster spindle 21 and a pressure element 22.

The adjuster spindle 21 has an external thread 21a and is screwed with its outer end portion into the inner thread of the bore 17a of the holder 17. The outer end of the adjuster spindle 21 is facing to the adjuster motor 16, and an inner end of the adjuster spindle 21 is facing to the brake disc 2.

The adjuster spindle 21 has an inner longitudinal bore with a flattened section 21c adapted to the flattened section 16b of the motor shaft 16a. The motor shaft 16a is inserted into the adjuster spindle 21. In this way, the adjuster spindle 14 is non-rotatably but axially displaceable connected to the motor shaft 16a of the adjuster motor 21.

When the adjuster motor 16 is energized, the motor shaft 16a is rotating either clockwise or counter-clockwise depending on the reversible adjuster motor. The adjuster spindle 21 will turn in the same direction as the motor shaft 16a, and will be accordingly axially displaced due to its thread 21b meshing with the thread of the holder 17.

The inner end of the adjuster spindle 21 has an end section 21b, which is connected to the pressure element 22. For this reason, the pressure element 22 has a connecting section 22a, which is inserted into the inner end section 21b. Furthermore, the pressure element 22 has an end face with a pressure surface 22b.

A part of the adjuster spindle 21 with its end section 21b and the pressure element 22 are arranged within a hole 5d of the guide bolt 5b of the guide bearing 5. The guide bolt 5b is stationary, because it is fixed to the brake carrier 3. The pressure surface 22b of the pressure element 22 contacts a base 5e of the hole 5d of the guide bolt 5b.

The installed spiral spring(s) 19 between the caliper back 4b and the brake carrier 3 at the outer side of the disc brake 1 is able to remove the outer brake pad 8 from the disc 2 in case of releasing the disc brake and hold it in the centered position independently from effects of the traffic situation. This outer brake pad 8 is fixed to the caliper back 4b and moves accordingly to the caliper sliding in the direction VR.

The electrical controlled adjuster motor 16 at the inner side of the disc brake 1 controls actively the optimal caliper position by a spindle drive comprising the adjuster spindle 21 according to the commands of the electrical control unit (ECU) 20. The transmission unit 18 forming a spindle drive has an axially sliding connection between the motor shaft 16a of the adjuster motor 16 and the spindle 21 which can provide axially movement of the spindle 21 in the case of brake actuation. This spindle drive is able to adjust the momentary end position of the movement of the caliper 4 in the direction VR. The installed spring elements 19 can hold the centered position by applying a holding force that compensates the axial forces due to dynamic effects on the one hand, or, on the other hand, can secure the outer clearance. Therefore the spring element 19 has a hard stop at a defined spring range that is equal with the specified outer clearance.

To avoid a displacement due to vibrations by dynamic effects, when a spindle drive with the adjuster spindle 21 is used to adjust the caliper 4, the adjuster spindle 21 is locked in direction of rotation by the holding torque of the active adjuster motor 16 or by a defined friction torque. The control unit 20 can evaluate the wear status of the brake parts (brake pads 7, 8 and brake disc 2) and can calculate the optimal position of the caliper 4 with or without measuring its real position. This means that an algorithm of the position control can be either an open or closed loop.

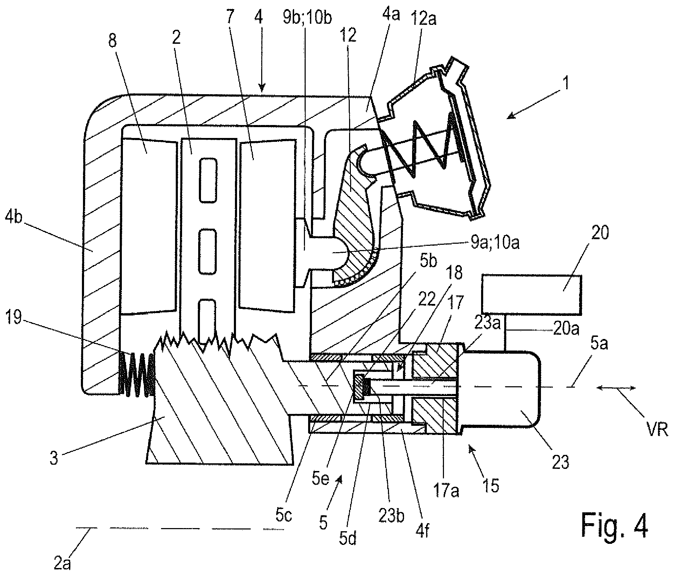

In **Figure 4** a generally schematic section through the disc brake 1 of Figure 1 with a second embodiment of the caliper position control unit 15 is shown.

In the second embodiment the active element is a linear motor 23. The holder 17, the design of the guide section 4f as well as the associated guide bearing 5 and the spring element 19 are similar or equal to those ones of the first embodiment shown in Figure 3. In the following, only the differences to Figure 3 are described.

An adjusting rod 23a of the linear motor 23 forms the transmission unit 18 together with the pressure element 22. The pressure element 22 is arranged at an end section 23b of the adjusting rod 23a and contacts the base 5e of the hole 5d of the guide bolt 5b (as shown in Figure 3).

Here, the position of the caliper 4 is adjusted either by the linear movement of an adjusting rod 23a of the linear motor 23 itself or by a spindle drive (not shown, but easy to imagine) that is designed as a ball screw drive to transform the linear movement of the linear motor 23 or its rod 23a into a rotational motion.

The linear motor 23 is connected to the control unit 20 via the control line 20a. The control unit 20 is adapted to control the linear motor 23.

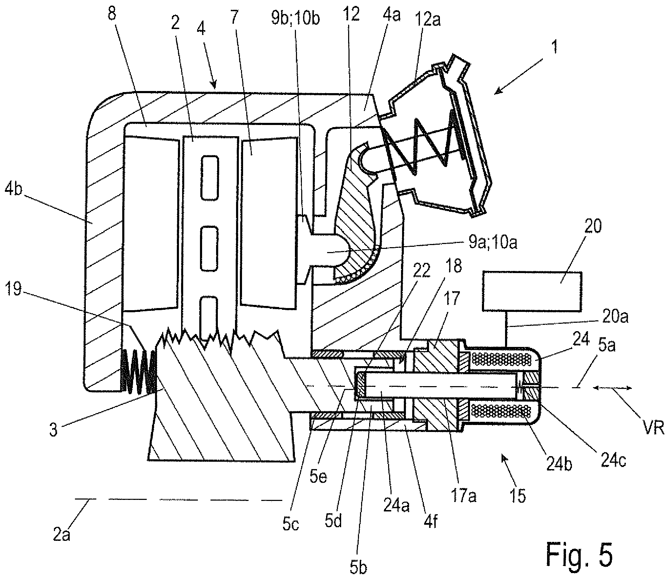

**Figure 5** illustrates a generally schematic section through the disc brake 1 of Figure 1 with a third embodiment of the caliper position control unit 15.

In this second embodiment the active element is an electromagnet 24. Also here, the holder 17, the design of the guide section 4f as well as the associated guide bearing 5 and the spring element 19 are similar or equal to the first embodiment shown in Figure 3. In the following, only the differences to Figure 3 are explained.

The electromagnet 24 has an adjusting rod 24a. The transmission unit 18 comprises the adjusting rod 24a and the pressure element 22. The adjusting rod 24a extends from within a solenoid 24b of the electromagnet 24 through the bore 17a of the holder 17. An outer end of the adjusting rod 24a contacts a spring 24c within the electromagnet 24 at an inner base thereof.

The electromagnet 24 is connected to the control unit 20 via the control line 23a. The solenoid 24b of the electromagnet 24 is supplied with a variable current to generate a defined force to fix or to hold the adjusting rod 24a in different driving situations.

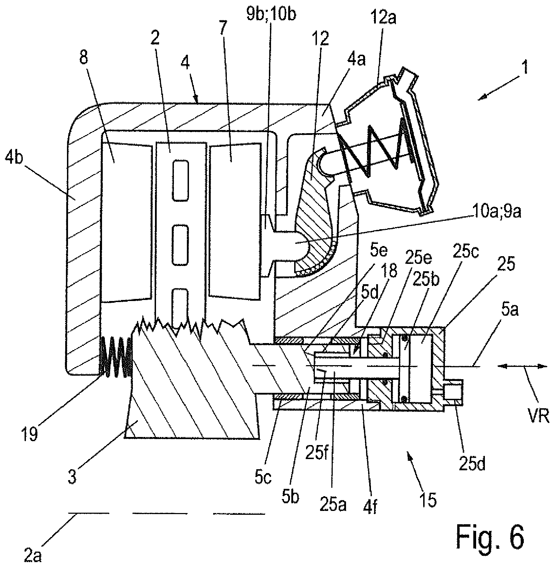

In a further embodiment the caliper position control unit 15 is realized by pneumatic elements inside the bearings. This is shown in **Figure 6** in a generally schematic section through the disc brake 1 of Figure 1 with a fourth embodiment of the caliper position control unit 15.

In this fourth embodiment, the design of the guide section 4f as well as the associated guide bearing 5 and the spring element 19 are similar or equal to the first embodiment shown in Figure 3. In the following, only the differences to Figure 3 are explained.

The active member is a fluid cylinder 25 comprising a piston rod 25a, a piston 25b, a fluid chamber 25c, a connection 25d and mounting flange 25e.

The fluid cylinder 25 is fixed by means of the flange 25e at the guide section 4f (similar to the holder 17, see Figure 3).

The piston 25b is arranged in the fluid chamber 25c and attached to the piston rod 25a, which in turn is axially displaceable supported in the flange 25e. The transmission unit 18 consists of the piston rod 25a. An end section 25f of the piston rod 25a contacts the base 5e of the guide bolt 5b as described above.

The fluid chamber 25c communicates with the connection 25d to be supplied with pressurized fluid, e.g. compressed air or hydraulic fluid.

The fluid cylinder 25, e.g. a pneumatic cylinder, with its functional elements (piston rod 25a, piston 25b) can be applied with pressure on an adjustable pressure level to generate the required holding force. The outboard clearance of the disc brake 1 is secured by the spring element 19, the spring force of which is higher than the holding force, and has a range of spring equal to the defined outboard clearance.

In non-braked driving situations the caliper 4 is kept in its centered position. After a brake actuation the outboard clearance is adjusted by the spring element 19. The caliper 4 is moved back into its centered position, which is kept by the holding force of the fluid cylinder 25 and its functional elements.

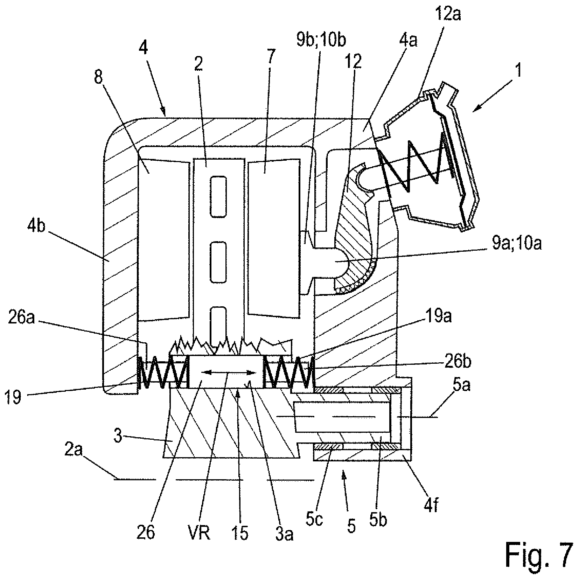

**Figure 7** depicts a generally schematic section through the disc brake 1 of Figure 1 with a fifth embodiment of the caliper position control unit 15.

A mechanical device alone comprising two spring elements 19, 19a and a cylindrical member 26, realizes the fifth embodiment of the caliper position control unit 15, which is a so called passive caliper position control unit 15.

The two spring elements 19, 19a are attached to the cylindrical member 26, which in turn is float-mounted on the brake carrier 3. Each one of the two spring elements 19, 19a is guided by means of a cylindrical spring guide 26a, 26b. Each spring guide 26a, 26b is respectively coaxially fixed to an end face of the cylindrical member 26. An outer spring element 19 of the two spring elements 19, 19a is arranged between the caliper back 4b and the outer end face of the cylindrical member 26. An inner spring element 19a of the two spring elements 19, 19a is arranged between the caliper head 4a and the inner end face of the cylindrical member 26.

The cylindrical member 26 is inserted into a guide section 3a. The guide section 3a is a through hole formed into the brake carrier 3 in parallel with the brake disc axis 2a. The contact surfaces of the cylindrical member 26 and the inner wall of the guide section 3a are provided with a high frictional force. Due to that force, the position of the cylindrical member 26 is kept until a certain threshold load will be exceeded.

The two spring elements 19, 19a generate equal spring forces. The caliper position control unit 15 moves back to the centered position after brake actuation. This centered position is kept due to force equilibrium of the spring forces of the spring elements 19, 19a. These spring forces are also capable to compensate axial forces by dynamic effects, and hence, prevent unwanted movement of the caliper 4.

In case of brake actuation the outer brake pad 8 is pressed against the outer side of the brake disc 2 by a movement of the caliper 4 (described in detail above). This displacement is stored within the outer spring element 19. The cylindrical member 26 is still in its initial centered position, as the spring force of the outer spring element 19 is not sufficient enough to overcome the high frictional force. After brake release, the stored displacement will be reset by the outer spring element 19.

The spring guides 26a, 26b have a defined clearance between their end faces and the caliper 4.

In case of wear of the brake pads 7, 8 and brake disc 2, the displacement of the caliper 4 is wider than the predefined distance between the spring guides 26a, 26b and the caliper 4. The then very high axial force exceeds the frictional force of the cylindrical member 26 in the guide section 3a, and the cylindrical member 26 moves slightly into a new position. This new position defines the new centered position of the caliper position control unit 15 now.

The arrangement of the active caliper position control unit 15 is adaptable for different floating caliper 4 designs. The position control of the caliper 4 can operate independently of the other elements of the existing or associated brake systems. The active caliper position adjustment function can be used independently of the wear adjustment function and its operating principle, e.g. mechanical or electrical, or it can be combined with an electrical adjuster version having an electric motor as an active element. In this case, the application of both combined electrical controlled functions can result in cost savings, due to the usability of some possible common parts (e.g. ECU, power supply parts, electric motor etc.).

The combination of these functions can result in a smarter brake system. The caliper position control unit 15 can eliminate or at least reduce residual drag torque in driving situations, when the brake is not actuated.

In case of a combined system like described above, the evaluation of signals or calculation results, e.g. wear status, brake pad clearance, caliper position, etc., can be complemented with other external information e.g. road condition from the GPS signal, steering status, etc.

This system can calculate and optimize the momentary position of the brake components for minimizing the cases of the disadvantageous situations (wear, overheating, fuel consumption and other aspects). The intelligent control of the caliper positioning and the evaluation of feedback signals can be further used for status monitoring and functional safety for autonomous driving technologies.

Therefore, conditions that deviate from the regular states a driver would recognize and stop the vehicle can be monitored and evaluated.

Another possible benefit considering autonomous driven commercial vehicles or road trains can be the monitoring of the brake energy input. Input energy amounts in case of full braking or emergency stops can be monitored and processed by the control unit and shared with other vehicles in the autonomous driving queue or with manned vehicles.

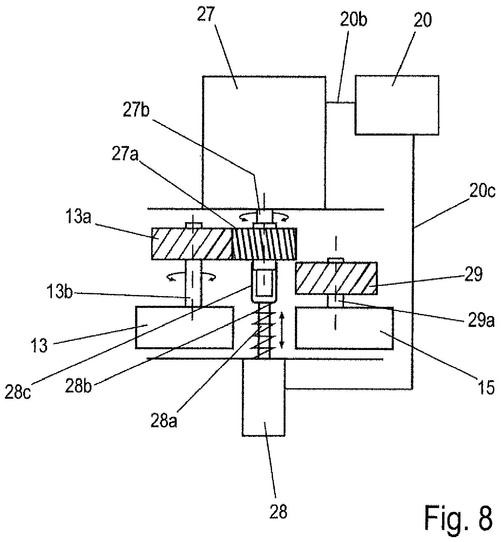

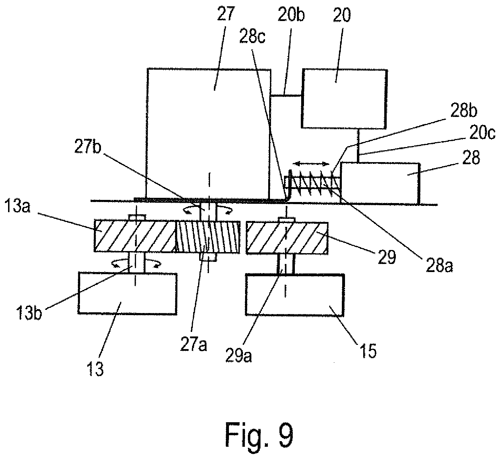

**Figures 8** and **9** show schematic arrangements of the caliper position control unit 15 in combination with a wear adjuster unit 13.

Two variants of kinematic sketches for this kind of function combination can be seen in Figures 8 and 9. An adjuster motor 27 and the electric control unit (ECU) 20 are common used parts of both solutions.

The first version in Figure 8 shows a solution for an axial switched gear wheel, the second version of Figure 9 is realized with a radial switched gear.

The arrangement of Figure 8 shows the adjuster motor 27 with a drive pinion 27a on a shaft 27b. The drive pinion 27a meshes with a pinion 13a on a shaft 13b of the wear adjuster unit 13. In this first position, the drive pinion 27a does not mesh with a pinion 29 on a shaft 29a of the caliper position control unit 15.

The drive pinion 27a is axially displaceable from the first position shown in Figure 8 into a second position (not shown, but easy to imagine), in which the drive pinion 27a meshes with the pinion 29 of the caliper position control unit 15. Axially displaceable means a displacement in direction of the axis of the drive pinion 27b and its shaft 27a.

According to the demand of the control software implemented in the control unit 20, an installed electromagnet 28 selects which units are connected to the drive pinion 27a of the adjuster motor 27 via switching the gear drive to the requested position by a switch rod 28a and a connector element 28c connected to the drive pinion 27a. Here, a spring 28c is provided, in order to shift the drive pinion 27a in the predefined first position. Due to safety reasons the main function of the combined unit is the wear adjuster unit 13. Therefore, this function is active when the electromagnet 28 is not energized.

In the arrangement of Figure 29, the drive pinion 27b is radially displaceable from its first position to its second position and back. Radially displaceable means it can be displaced in a direction radial or rectangular to the axis of the drive pinion 27b and the shaft 27a.

The control unit 20 is connected to the adjuster motor 27 via a control line 20b and to the electromagnet 28 via a control line 20c. The control line 20a to connect the caliper position control unit 15 is not shown in Figures 8 and 9, but obvious from Figures 2 and 4 to 7.

The foregoing descriptions of specific embodiments of the invention have been presented for purposes of illustration and description. They are not intended to be exhaustive or to limit the invention to the precise forms disclosed. It is obvious that many modifications and variations are possible. It is intended that the scope of the invention be defined by the claims appended hereto and their equivalents.

The brake actuator 12a of the disc brake 1 can be a compressed air cylinder, i.e. the disc brake 1 is a pneumatically actuated disc brake 1.

### REFERENCES

- 1: Disc Brake
- 2: Brake Disc
- 2a: Disc Axis
- 3: Brake Carrier
- 3a: Guide Section
- 4: Caliper
- 4a: Caliper Head
- 4b: Caliper Back
- 4c, 4d: Tension Strut
- 4e, 4f: Guide Section
- 5, 6: Guide Bearing
- 5a, 6a: Guide Axis
- 5b, 6b: Guide Bolt
- 5c, 6c: Sliding Bearing
- 5d: Hole
- 5e: Base
- 5f: Face End
- 7, 8: Brake Pad
- 7a, 8a: Backplate
- 9, 10: Brake Plunger Unit
- 9a, 10a: Brake Plunger
- 9b, 10b: Tappet
- 11: Crosshead
- 11a: Return Spring
- 12: Brake Lever
- 12a: Brake Actuator
- 13: Wear Adjuster Unit
- 13a: Pinion
- 13b: Shaft
- 14: Synchronisation Unit
- 14a: Synchronisation Chain
- 15: Caliper Position Control Unit
- 16: Adjuster Motor
- 16a: Motor Shaft
- 16b: Flattened Section
- 16c: Shaft End
- 17: Holder
- 17a: Bore
- 17b: Thread
- 17c, 17d: End Face
- 18: Transmission unit
- 19, 19a: Spring Element
- 20: Control Unit
- 20a, 20b, 20c: Control Line
- 21: Adjuster Spindle
- 21a: Thread
- 21b: End Section
- 21c: Flattened Section
- 22: Pressure Element
- 22a: Connecting Section
- 22b: Pressure Surface
- 23: Linear Motor
- 23a: Adjusting Rod
- 23b: End Section
- 24: Electromagnet
- 24a: Adjusting Rod
- 24b: Solenoid
- 24c: Spring
- 25: Fluid Cylinder
- 25a: Piston Rod
- 25b: Piston
- 25c: Fluid Chamber
- 25d: Connection
- 25e: Mounting Flange
- 25f: End Section
- 26: Cylindrical Member
- 26a, 26b: Spring Guide
- 27: Adjuster Motor
- 27a: Drive Pinion
- 27b: Shaft
- 28: Electromagnet
- 28a: Switch Rod
- 28b: Spring
- 28c: Connector Element
- 29: Pinion
- 29a: Shaft
- VR: Direction

## Claims

1. A disc brake (1), in particular pneumatically actuated, for a vehicle, in particular for a commercial vehicle, comprising a floating caliper (4) straddling a brake disc (2) and float-mounted on at least one guide bearing (5, 6) of a stationary brake carrier (3); two brake pads (7, 8) displaceable arranged in opposite direction in the caliper (4), wherein one inner brake pad (7) of the two brake pads (7, 8) can be pressed against the brake disc (2) by a brake application device having at least one brake plunger unit (9, 10) and a brake lever (12); and at least one readjusting device for moving the caliper (4) back to its initial position when the disc brake (1) is in a release position of the disc brake (1) after braking,
wherein the readjusting device is an active caliper position control unit (15) comprising at least one active force generating unit (16, 23, 24, 25), a transmission unit (18), at least one spring element (19) and a control unit (20) **characterized in that**
the caliper position control unit (15) is arranged at an outer end of a guide section (4f) of a caliper head (4a) and cooperates with the stationary brake carrier (3), wherein the spring element (19) is arranged between an inner wall of a section of a caliper back (4b) and the stationary brake carrier (3).

2. The disc brake (1) according to claim 1,
**characterized in that**
the at least one active force generating unit is an electric adjuster motor (16).

3. The disc brake (1) according to claim 2,
**characterized in that**
the active caliper position control unit (15) further comprises a holder (17), which is fixed to the adjuster motor (16) and fixed to the guide section (4f) of the caliper head (4a).

4. The disc brake (1) according to claim 3,
**characterized in that**
the transmission unit (18) has an adjuster spindle (21) which meshes with the holder (17) via a thread (21a) and is non-rotatably but axially displaceable connected to a motor shaft (16a) of the adjuster motor (21), wherein an end section (21b) of the adjuster spindle (21) is in contact with a guide bolt (5b, 6b) of the guide bearing (5, 6) via a pressure element (22).

5. The disc brake (1) according to claim 4,
**characterized in that**
the adjuster motor (16), the holder (17) and the transmission unit (18) are arranged coaxially to a guide axis (5a, 6a) of the guide bearing (5, 6).

6. The disc brake (1) according to claim 1,
**characterized in that**
the at least one active force generating unit is an electric linear motor (23).

7. The disc brake (1) according to claim 6,
**characterized in that**
the active caliper position control unit (15) further comprises a holder (17), which is fixed to the linear motor (23) and fixed to the guide section (4f) of the caliper head (4a).

8. The disc brake (1) according to claim 7,
**characterized in that**
an adjusting rod (23a) of the linear motor (23) forms the transmission unit (18) together with a pressure element (22), which is arranged at an end section (23b) of the adjusting rod (23a) and contacts the guide bolt (5b, 6a) of the guide bearing (5, 6).

9. The disc brake (1) according to claim 7,
**characterized in that**
the transmission unit (18) has a spindle drive that is designed as a ball screw drive to transform the linear movement of the linear motor (23) or its rod (23a) into a rotational motion.

10. The disc brake (1) according to claim 8 or 9,
**characterized in that**
the linear motor (23), the holder (17) and the transmission unit (18) are arranged coaxially to a guide axis (5a, 6a) of the guide bearing (5, 6).

11. The disc brake (1) according to claim 1,
**characterized in that**
the at least one active force generating unit is an electromagnet (24).

12. The disc brake (1) according to claim 11,
**characterized in that**
the active caliper position control unit (15) further comprises a holder (17), which is fixed to the electromagnet (24) and fixed to the guide section (4f) of the caliper head (4a), wherein an adjusting rod (24a) of the electromagnet (24) forms the transmission unit (18) together with a pressure element (22), which is arranged at an end section of the adjusting rod (24a) and contacts the guide bolt (5b, 6a) of the guide bearing (5, 6).

13. The disc brake (1) according to claim 1,
**characterized in that**
the at least one active force generating unit is a fluid cylinder (25) comprising a piston rod (25a) with a piston (25b), wherein the piston rod (25a) forms the transmission unit (18), wherein the piston rod (25a) contacts the guide bolt (5b, 6a) of the guide bearing (5, 6).

14. The disc brake (1) according to one or several of the claims 1 to 10,
the disc brake (1) further comprising a wear adjuster unit (13),
**characterized in that**
the wear adjuster unit (13) and the active caliper position control unit (15) comprise a common adjuster motor (27) and a common electric control unit (20), wherein the common adjuster motor (27) has an axial and/or radial switched gear.

15. The disc brake (1) according to claim 14,
**characterized in that**
the axial and/or radial switched gear of the common electric adjuster motor (27) is switched by an electromagnet (28).

16. A disc brake (1) for a vehicle, in particular for a commercial vehicle, comprising a floating caliper (4) straddling a brake disc (2) and float-mounted on at least one guide bearing (5, 6) of a stationary brake carrier (3); two brake pads (7, 8) displaceable arranged in opposite direction in the caliper (4), wherein one inner brake pad (7) of the two brake pads (7, 8) can be pressed against the brake disc (2) by a brake application device having at least one brake plunger unit (9, 10) and a brake lever (12); and at least one readjusting device for moving the caliper (4) back to its initial position when the disc brake (1) is in a release position of the disc brake (1) after braking,
**characterized in that**
the at least one readjusting device is a passive caliper position control unit (15) comprising two spring elements (19, 19a) and a cylindrical member (26), wherein the two spring elements (19, 19a) are attached to the cylindrical member (26), which in turn is float-mounted on the brake carrier (3).

17. The disc brake (1) according to claim 16,
**characterized in that**
each one of the two spring elements (19, 19a) is guided by means of a cylindrical spring guide (26a, 26b), wherein each spring guide (26a, 26b) is respectively coaxially fixed to an end face of the cylindrical member (26), and wherein an outer spring element (19) of the two spring elements (19, 19a) is arranged between a caliper back (4b) and an outer end face of the cylindrical member (26), and an inner spring element (19a) of the two spring elements (19, 19a) is arranged between a caliper head (4a) and an inner end face of the cylindrical member (26).

18. The disc brake (1) according to claim 17,
**characterized in that**
the cylindrical member (26) is inserted into a guide section (3a) of the brake carrier (3), wherein the guide section (3a) is a through hole formed into the brake carrier (3) in parallel with a brake disc axis (2a), and wherein contact surfaces of the cylindrical member (26) and an inner wall of the guide section (3a) are provided with a high frictional force.

19. The disc brake (1) according to claim 20,
**characterized in that**
the two spring elements (19, 19a) are provided with equal spring forces.

## Patentansprüche

1. Scheibenbremse (1), insbesondere druckluftbetätigt, für ein Fahrzeug, insbesondere ein Nutzfahrzeug, mit einem eine Bremsscheibe (2) überspannenden Schwimmsattel (4), der schwimmend an mindestens einem Führungslager (5, 6) eines ortsfesten Bremsträgers (3) gelagert ist; mit zwei in einander gegenüberliegenden Richtungen verschiebbar im Sattel (4) gelagerten Bremsbelägen (7, 8), wobei ein innerer Bremsbelag (7) der beiden Bremsbeläge (7, 8) von einer Zuspannvorrichtung mit mindestens einer Bremskolbeneinheit (9, 10) und einem Bremshebel (12) gegen die Bremsscheibe (2) gepresset werden kann; und mit mindestens einer Nachstellvorrichtung zur Rückstellung des Sattels (4) in seine Ausgangsstellung, wenn die Scheibenbremse (1) nach dem Bremsen in einer Lösestellung ist,
wobei die Nachstellvorrichtung eine aktive Sattellageregeleinheit (15) ist, die mindestens eine aktive Krafterzeugungseinheit (16, 23, 24, 25), eine Übertragungseinheit (18), mindestens ein Federelement (19) und eine Steuereinheit (20) umfasst,
**dadurch gekennzeichnet, dass**
die Sattellageregeleinheit (15) an einem äußeren Ende eines Führungsabschnitts (4f) eines Sattelkopfes (4a) angeordnet ist und mit dem ortsfesten Bremsträger (3) zusammenarbeitet, wobei das Federelement (19) zwischen einer Innenwand eines Abschnitts eines Sattelrückens (4b) und dem ortsfesten Bremsträger (3) angeordnet ist.

2. Scheibenbremse (1) nach Anspruch 1,
**dadurch gekennzeichnet, dass**
die mindestens eine aktive Krafterzeugungseinheit ein elektrischer Nachstellmotor (16) ist.

3. Scheibenbremse (1) nach Anspruch 2,
**dadurch gekennzeichnet, dass**
die aktive Sattellageregeleinheit (15) weiter einen Halter (17) umfasst, der am Nachstellmotor (16) und am Führungsabschnitt (4f) eines Sattelkopfes (4a) befestigt ist.

4. Scheibenbremse (1) nach Anspruch 3,
**dadurch gekennzeichnet, dass**
die Übertragungseinheit (18) eine Nachstellspindel (21) aufweist, die über ein Gewinde (21a) mit dem Halter (17) im Eingriff steht und drehfest aber axial verschiebbar mit einer Motorwelle (16a) des Nachstellmotors (16) verbunden ist, wobei ein Endabschnitt (21b) der Nachstellspindel (21) über ein Druckelement (22) mit einem Führungsbolzen (5b, 6b) des Führungslagers (5, 6) in Kontakt ist.

5. Scheibenbremse (1) nach Anspruch 4,
**dadurch gekennzeichnet, dass**
der Nachstellmotor (16), der Halter (17) und die Übertragungseinheit (18) koaxial mit einer Führungsachse (5a, 6a) des Führungslagers (5, 6) angeordnet sind.

6. Scheibenbremse (1) nach Anspruch 1,
**dadurch gekennzeichnet, dass**
die mindestens eine aktive Krafterzeugungseinheit ein elektrischer Linearmotor (23) ist.

7. Scheibenbremse (1) nach Anspruch 6,
**dadurch gekennzeichnet, dass**
die aktive Sattellageregeleinheit (15) weiter einen Halter (17) umfasst, der am Linearmotor (23) und am Führungsabschnitt (4f) des Sattelkopfes (4a) befestigt ist.

8. Scheibenbremse (1) nach Anspruch 7,
**dadurch gekennzeichnet, dass**
eine Nachstellstange (23a) des Linearmotors (23) zusammen mit einem Druckelement (18), das an einem Endabschnitt (23b) der Nachstellstange (23a) angeordnet ist und mit dem Führungsbolzen (5b, 6b) des Führungslagers (5, 6) in Kontakt ist, die Übertragungseinheit (18) bildet.

9. Scheibenbremse (1) nach Anspruch 7,
**dadurch gekennzeichnet, dass**
die Übertragungseinheit (18) einen Spindeltrieb aufweist, der als Kugelspindelantrieb zur Umsetzung der Linearbewegung des Linearmotors (23) bzw. seiner Stange (23a) in eine Drehbewegung ausgelegt ist.

10. Scheibenbremse (1) nach Anspruch 8 oder 9,
**dadurch gekennzeichnet, dass**
der Linearmotor (23), der Halter (17) und die Übertragungseinheit (18) koaxial mit einer Führungsachse (5a, 6a) des Führungslagers (5, 6) angeordnet sind.

11. Scheibenbremse (1) nach Anspruch 1,
**dadurch gekennzeichnet, dass**
die mindestens eine aktive Krafterzeugungseinheit ein Elektromagnet (24) ist.

12. Scheibenbremse (1) nach Anspruch 11,
**dadurch gekennzeichnet, dass**
die aktive Sattellageregeleinheit (15) weiter einen Halter (17) umfasst, der am Elektromagnet (24) und am Führungsabschnitt (4f) des Sattelkopfes (4a) befestigt ist, wobei eine Nachstellstange (24a) des Elektromagnets (24) zusammen mit einem Druckelement (22), das an einem Endabschnitt der Nachstellstange (24a) angeordnet ist und mit dem Führungsbolzen (5b, 6b) des Führungslagers (5, 6) in Kontakt ist, die Übertragungseinheit (18) bildet.

13. Scheibenbremse (1) nach Anspruch 1,
**dadurch gekennzeichnet, dass**
die mindestens eine aktive Krafterzeugungseinheit ein eine Kolbenstange (25a) mit einem Kolben (25b) umfassender Fluidzylinder (25) ist, wobei die Kolbenstange (25a) die Übertragungseinheit (18) bildet, wobei die Kolbenstange (25a) mit dem Führungsbolzen (5b, 6b) des Führungslagers (5, 6) in Kontakt ist.

14. Scheibenbremse (1) nach einem oder mehreren der Ansprüche 1 bis 10, wobei die Scheibenbremse (1) weiter eine Verschleißnachstelleinheit (13) umfasst,
**dadurch gekennzeichnet, dass**
die Verschleißnachstelleinheit (13) und die aktive Sattellageregeleinheit (15) einen gemeinsamen Nachstellmotor (27) und eine gemeinsame elektrische Steuereinheit (20) umfassen, wobei der gemeinsame Nachstellmotor (27) einen axialen und/oder radialen geschalteten Gang aufweist.

15. Scheibenbremse (1) nach Anspruch 14,
**dadurch gekennzeichnet, dass**
der axiale und/oder radiale geschaltete Gang des gemeinsamen elektrischen Nachstellmotors (27) von einem Elektromagnet (28) geschaltet wird.

16. Scheibenbremse (1) für ein Fahrzeug, insbesondere ein Nutzfahrzeug, mit einem eine Bremsscheibe (2) überspannenden Schwimmsattel (4), der schwimmend an mindestens einem Führungslager (5, 6) eines ortsfesten Bremsträgers (3) gelagert ist; mit zwei in einander gegenüberliegenden Richtungen verschiebbar im Sattel (4) gelagerten Bremsbelägen (7, 8), wobei ein innerer Bremsbelag (7) der beiden Bremsbeläge (7, 8) von einer Zuspannvorrichtung mit mindestens einer Bremskolbeneinheit (9, 10) und einem Bremshebel (12) gegen die Bremsscheibe (2) gepresset werden kann; und mit mindestens einer Nachstellvorrichtung zur Rückstellung des Sattels (4) in seine Ausgangsstellung, wenn die Scheibenbremse (1) nach dem Bremsen in einer Lösestellung ist,
**dadurch gekennzeichnet, dass**
die mindestens eine Nachstellvorrichtung eine passive Sattellageregeleinheit (15) ist, die zwei Federelemente (19, 19a) und ein zylinderförmiges Glied (26) umfasst, wobei die zwei Federelemente (19, 19a) am zylinderförmigen Glied (26) angebracht sind, das seinerseits schwimmend am Bremsträger (3) gelagert ist.

17. Scheibenbremse (1) nach Anspruch 16,
**dadurch gekennzeichnet, dass**
die zwei Federelemente (19, 19a) jeweils mittels einer zylinderförmigen Federführung (26a, 26b) geführt werden, wobei eine jede Federführung (26a, 26b) an einer Stirnfläche des zylinderförmiges Gliedes (26) befestigt ist, und wobei ein äußeres Federelement (19) der beiden Federelemente (19, 19a) zwischen einem Sattelrücken (4b) und einer äußeren Stirnfläche des zylinderförmiges Gliedes (26) angeordnet ist und ein inneres Federelement (19a) der beiden Federelemente (19, 19a) zwischen einem Sattelkopf (4a) und einer inneren Stirnfläche des zylinderförmiges Gliedes (26) angeordnet ist.

18. Scheibenbremse (1) nach Anspruch 17,
**dadurch gekennzeichnet, dass**
das zylinderförmige Glied (26) in einen Führungsabschnitt (3a) des Bremsträgers (3) eingeführt wird, wobei der Führungsabschnitt (3a) eine parallel zu einer Bremsscheibenachse (2a) im Bremsträger (3) ausgebildete Durchgangbohrung ist, und wobei Kontaktflächen des zylinderförmigen Gliedes (26) und eine Innenwand des Führungsabschnitts (3a) mit einer hohen Reibungskraft versehen sind.

19. Scheibenbremse (1) nach Anspruch 20,
**dadurch gekennzeichnet, dass**
die beiden Federelemente (19, 19a) mit gleichen Federkräften versehen sind.

## Revendications

1. Frein (1) à disque, en particulier à actionnement pneumatique, d'un véhicule, en particulier d'un véhicule industriel, comprenant un étrier (4) flottant, chevauchant un disque (2) de frein et monté à flottement sur au moins un palier (5, 6) de guidage d'un support (3) fixe de frein ; deux garnitures (7, 8) de frein mobiles, disposées dans un sens opposé dans l'étrier (4), dans lequel une garniture (7) intérieure de frein des deux garnitures (7, 8) de frein peut être pressée sur le disque (2) de frein par un dispositif d'application du frein, ayant au moins une unité (9, 10) formant plongeur de frein et un levier (12) de frein ; et au moins un dispositif de réajustement pour ramener l'étrier (4) à sa position initiale, lorsque le frein (1) à disque est dans une position de desserrage du frein (1) à disque après freinage,
dans lequel le dispositif de réajustement est une unité (15) active de commande de la position de l'étrier, comprenant au moins une unité (16, 23, 24, 25) active de production d'une force, une unité (18) de transmission, au moins un élément (19) de ressort et une unité (20) de commande,
**caractérisé en ce que**
l'unité (15) de commande de la position de l'étrier est disposée à une extrémité extérieure d'une partie (4f) de guidage d'une tête (4a) de l'étrier et coopère avec le support (3) fixe du frein, l'élément (19) de ressort étant disposé entre une paroi intérieure d'une partie du dos (4b de l'étrier et le support (3) fixe du frein.

2. Frein (1) à disque suivant la revendication 1,
**caractérisé en ce que**
la au moins une unité active produisant une force est un moteur (16) électrique de compensation.

3. Frein (1) à disque suivant la revendication 2,
**caractérisé en ce que**
l'unité (15) active de commande de la position de l'étrier comprend, en outre, un support (17), qui est fixé au moteur (16) de compensation et fixé à la partie (4f) de guidage de la tête (4a) de l'étrier.

4. Frein (1) à disque suivant la revendication 3,
**caractérisé en ce que**
l'unité (18) de transmission a une broche (21) de régleur, qui engrène avec le support (17) par un filetage (21a) et est reliée, d'une manière non déplaçable à rotation mais déplaçable axialement, à un arbre (16a) du moteur (21) de compensation, dans lequel une partie (21b) d'extrémité de la broche (21) de régleur est en contact avec un boulon (5b, 6b) de guidage du palier (5, 6) de guidage par l'intermédiaire d'un élément (22) d'application d'une pression.

5. Frein (1) à disque suivant la revendication 4,
**caractérisé en ce que**
le moteur (16) de compensation, le support (17) et l'unité (18) de transmission sont disposés coaxialement à un axe (5a, 6a) de guidage du palier (5, 6) de guidage.

6. Frein (1) à disque suivant la revendication 1,
**caractérisé en ce que**
la au moins une unité active produisant une force est un moteur (23) électrique linéaire.

7. Frein (1) à disque suivant la revendication 6,
**caractérisé en ce que**
l'unité (15) active de commande de la position de l'étrier comprend, en outre, un support (17), qui est fixé au moteur (23) linéaire et fixé à la partie (4f) de guidage de la tête (4a) de l'étrier.

8. Frein (1) à disque suivant la revendication 7,
**caractérisé en ce qu'**
une cuve (23a) de réglage du moteur (23) linéaire forme l'unité (18) de transmission, ensemble avec un élément (22) d'application d'une pression, qui est disposé à une partie (23b) d'extrémité de la tige (23a) de réglage et est en contact avec le boulon (5b, 6a) de guidage du palier (5, 6) de guidage.

9. Frein (1) à disque suivant la revendication 7,
**caractérisé en ce que**
l'unité (18) de transmission a un entraînement à broche, qui est conçu sous la forme d'un entraînement à vis à bille pour transformer le mouvement linéaire du moteur (23) linéaire ou de sa cuve (23a) en un mouvement de rotation.

10. Frein (1) à disque suivant la revendication 8 ou 9,
**caractérisé en ce que**
le moteur (23) linéaire, le support (17) et l'unité (18) de transmission sont disposés coaxialement à un axe (5a, 6a) de guidage du palier (5, 6) de guidage.

11. Frein (1) à disque suivant la revendication 1,
**caractérisé en ce que**
la au moins une unité active produisant une force est un électroaimant (24).

12. Frein (1) à disque suivant la revendication 11,
**caractérisé en ce que**
l'unité (15) active de commande de la position de l'étrier comprend, en outre, un support (17), qui est fixé à l'électroaimant (24) et fixé à la partie (4f) de guidage de la tête (4a) de l'étrier, une tige (24a) de réglage de l'électroaimant (24) formant l'unité (18) de transmission, ensemble avec un élément (22) d'application d'une pression, qui est disposé à une partie d'extrémité de la tige (24a) de réglage et est en contact avec le boulon (5b, 6a) de guidage du palier (5, 6) de guidage.

13. Frein (1) à disque suivant la revendication 1,
**caractérisé en ce que**
**en ce que** la au moins une unité active produisant une force est un vérin (25) à fluide, comprenant une tige (25a) de piston avec un piston (25b), la tige (25a) de piston formant l'unité (18) de transmission, la tige (25a) de piston étant en contact avec le boulon (5b, 6a) de guidage de palier (5, 6) de guidage.

14. Frein (1) à disque suivant l'une ou plusieurs des revendications 1 à 10, le frein (1) à disque comprenant, en outre, une unité (13) de compensation de l'usure,
**caractérisé en ce que**
l'unité (13) de compensation de l'usure et l'unité (15) active de commande de la position de l'étrier comprennent un moteur (27) commun de compensation et une unité (20) commune électrique de commande, le moteur (27) commun de compensation ayant une transmission à commutation axiale et/ou radiale.

15. Frein (1) à disque suivant la revendication 14,
**caractérisé en ce que**
la transmission à commutation axiale et/ou radiale du moteur (27) commun électrique de compensation est commutée par un électroaimant (28).

16. Frein (1) à disque d'un véhicule, en particulier d'un véhicule industriel, en particulier d'un véhicule industriel, comprenant un étrier (4) flottant, chevauchant un disque (2) de frein et monté à flottement sur au moins un palier (5, 6) de guidage d'un support (3) fixe de frein ; deux garnitures (7, 8) de frein mobiles, disposées dans un sens opposé dans l'étrier (4), dans lequel une garniture (7) intérieure de frein des deux garnitures (7, 8) de frein peut être pressée sur le disque (2) de frein par un dispositif d'application du frein, ayant au moins une unité (9, 10) formant plongeur de frein et un levier (12) de frein ; et au moins un dispositif de réajustement pour ramener l'étrier (4) à sa position initiale, lorsque le frein (1) à disque est dans une position de desserrage du frein (1) à disque après freinage,
**caractérisé en ce que**
le au moins un dispositif de réajustement est une unité (15) passive de commande de la position de l'étrier, comprenant deux éléments (19, 19a) de ressort et un élément (26) cylindrique, les deux éléments (19, 19a) de ressort étant fixés à l'élément (26) cylindrique, qui, à son tour, est monté à flottement sur le support (3) de frein.

17. Frein (1) à disque suivant la revendication 16,
**caractérisé en ce que**
chacun des deux éléments (19, 19a) de ressort est guidé au moyen d'un guide (26a, 26b) cylindrique de ressort, chaque guide (26a, 26b) de ressort étant fixé, respectivement, coaxialement à une face d'extrémité de l'élément (26) cylindrique, et dans lequel un élément (19) extérieur de ressort, parmi les deux éléments (19, 19a) de ressort, est disposé entre un dos (4b) de l'étrier et une face d'extrémité extérieure de l'élément (26) cylindrique, et un élément (19a) intérieur de ressort, parmi les deux éléments (19, 19a) de ressort, est disposé entre une tête (4a) de l'étrier et une face d'extrémité intérieure de l'élément (26) cylindrique.

18. Frein (1) à disque suivant la revendication 17,
**caractérisé en ce que**
l'élément (26) cylindrique est inséré dans une partie (3a) de guidage du support (3) du frein, la partie (3a) de guidage étant un trou traversant formé dans le support (3) de frein, parallèlement à l'axe (2a) du disque de frein, et des surfaces de contact de l'élément (26) cylindrique et une paroi intérieure de la partie (3a) de guidage sont pourvues d'une grande force de frottement.

19. Frein (1) à disque suivant la revendication 20,
**caractérisé en ce que**
les deux éléments (19, 19a) de ressort ont des forces de ressort égales.
